# EUROPÄISCHE PATENTSCHRIFT

(11) **EP 0 320 743 B1**
(45) Veröffentlichungstag und Bekanntmachung des Hinweises auf die Patenterteilung: **27.10.1993**
(21) Anmeldenummer: 88120311.1
(22) Anmeldetag: 06.12.1988
(51) Int. Cl.: G11B 27/10, G11B 15/02, G11B 27/32

(54) **Videorecorder mit einem eine zusätzliche Steuersignalspur enthaltenden Videoband**
Video recorder with a video tape comprising an additional control track
Magnétoscope avec une bande vidéo comprenant une piste de contrôle additionnelle

(30) Priorität: 15.12.1987 DE 3742471
(43) Veröffentlichungstag der Anmeldung: 21.06.1989
(73) Patentinhaber: Nokia (Deutschland) GmbH, 75175 Pforzheim (DE)
(72) Erfinder: Apitz, Siegfried, Dipl.-Ing., D-7530 Pforzheim (DE); Müller, Helmut, Dipl.-Ing., D-7530 Pforzheim (DE)

(56) Entgegenhaltungen:
- EP-A- 0 186 835
- EP-A- 0 211 388
- WO-A-84/02221
- DE-A- 3 325 810
- DE-A- 3 543 686
- DE-A- 3 735 539
- US-A- 3 851 116
- US-A- 4 689 699
- PATENT ABSTRACTS OF JAPAN vol. 5, no. 182 (P-90)(854) 20 November 1981, & JP-A-56 111144

## Beschreibung

Die Erfindung betrifft einen Videorecorder nach dem Oberbegriff des Patentanspruches 1. Ein derartiger Videorecorder ist aus der DE-OS 34 12 735 bekannt. Der bekannte Videorecorder enthält eine Laufwerk-Steuereinrichtung, an der nicht nur ein schneller Suchlauf des Videobandes eingestellt werden kann und bei dem die auf das Videoband aufgezeichnete Videodarbietung abgetastet wird, sondern auch ein sogenannter Schnellauf des Videobandes eingestellt werden kann, bei dem das Videoband außerhalb einer Abtasteinstellung umgespult wird. Eine besondere Recheneinrichtung des bekannten Videorecorders sorgt dafür, daß auch bei einem Schnellauf des Videobandes die jeweilige Bandposition des Videobandes bezüglich der Abtaststelle laufend ermittelt wird. Diese Einrichtung ist u.a. dazu vorgesehen, eine auf das Videoband aufgezeichnete Videodarbietung, deren Anfang als Bandposition notiert wurde, verhältnismäßig schnell aufzufinden. Die Ermittlung der Bandposition während des Schnellaufes des Videobandes ist jedoch nicht so genau, daß die am Videorecorder angezeigte Bandposition auch tatsächlich die Bandposition des Anfanges der gesuchten Videodarbietung ist. Der Benutzer des bekannten Videorecorders muß vielmehr nach Stillsetzen des Schnellaufes den schnellen Suchlauf einschalten, um in einem Vorwärtslauf oder einem Rückwärtslauf des Videobandes die gesuchte Videodarbietung mit einem mehr oder weniger großen Zeitaufwand zu finden.

Aus der DE-Zeitschrift "Funkschau" 1987, Heft 8, Seite 35 bis 38 ist eine Einrichtung bekannt, mit der auf die sogenannte Kontrollspur zur Synchronisation der auf das Videoband aufgezeichneten Videobilder einer Videodarbietung zusätzlich ein Zeitcode aufgezeichnet wird. Die Bildwiedergabe vom Videoband wird mittels der Vorderflanke der auf der Kontrollspur enthaltenen Steuerimpulse synchronisiert. Die Lage der Rückflanken dieser Impulse wird für den Zeitcode ausgenützt. Der Zeitcode stellt fortlaufend die bisher abgelaufene Laufzeit des Videobandes dar. Eine Zeitangabe erstreckt sich bei dem bekannten Zeitcode über wenigstens 50 Steuerimpulse, so daß eine Zeitungenauigkeit von einigen Sekunden vorliegt. Außerdem beansprucht die Einrichtung zur Aufzeichnung dieses Zeitcodes und eine Einrichtung zur Abtastung und Auswertung dieses Zeitcodes einen verhältnismäßig großen Aufwand, der nicht dazu geeignet ist, derartige Einrichtungen in breiterem Umfang bei Videogeräten der Unterhaltungselektronik zu verwenden. Ferner nutzt dieser Zeitcode wenig, wenn sich der Benutzer des Videorecorders bei der Notierung der Bandposition für den Anfang einer auf das Videoband aufgezeichneten Videodarbietung um einige Minuten geirrt hat.

Ein aus der US-Patentschrift 4689699 bekannter Videorecorder mit einem Videoband, das eine Steuersignalspur zur Synchronisierung des Videobandes auf jeweils den Bildanfang durch Cue-Signale aufweist, enthält auf der Steuersignalspur Zielmarkierungen zum Auffinden von auf das Videoband aufgezeichneten Videodarbietungen. Diese Zielmarkierungen auf der Steuersignalspur sind derart gestaltet, daß eine kurze Zeit nach Beginn einer Videoaufzeichnung die Steuerspur für eine kurze Zeitspanne, die kleiner ist als eine bestimmte kurze Zeitdauer t1, unterbrochen wird und am Ende der Aufzeichnung ebenfalls eine Zeitspanne unterbrochen ist, die größer ist als die bestimmte kurze Zeitdauer t1. Damit ist der Anfang und das Ende jeder Aufzeichnung auf dem Videoband auffindbar positioniert. Um die Zeitmarkierung einer Aufzeichnung auf dem Videoband aufzufinden, wird das Videoband in einem schnellen Suchlauf, während dem der Steuerspurkopf die Steuersignalspur des Videobandes abtastet, in Richtung auf den Anfang der Aufzeichnung transportiert und beim Erkennen einer die bestimmte Zeitspanne nicht ausfüllenden Steuerspurlücke entweder mit langsamer Transportgeschwindigkeit bis zum Anfang der Steuerlücke zurücktransportiert, wenn das Aufsuchen im schnellen Suchlauf im Vorlauftransport erfolgte und andernfalls am Anfang der Steuerspurlücke mit der gleichen Transportgeschwindigkeit in die Gegenrichtung umgeschaltet wird und danach am Ende der Steuerspurlücke mit langsamer Transportgeschwindigkeit wieder bis zum Anfang der Steuerspurlück zurücktransportiert wird, wenn der schnelle Suchlauf in Rücklaufrichtung erfolgte.

Die Suchgeschwindigkeit kann bei dem bekannten Videorecorder nicht über die Geschwindigkeit des schnellen Suchlaufes hinaus erhöht werden, da der Steuerspurkopf beim Suchlauf die Steuersignalspur auf eine Spurlücke abtasten muß. Außerdem wird der Suchlauf bei jedem Anfang einer Aufzeichnung gestoppt und muß vom Benutzer des Gerätes fortgeschaltet werden, was lästig sein kann. Ferner wird bei jeder Unterbrechung der Steuersignalspur die Bandsynchronisierung mit der Kopftrommel unterbrochen, so daß an jedem Anfang einer Aufzeichnung für eine kurze Zeit, bis die Bandsynchronisierung wieder hergestellt ist, Bildsynchronisationsstörungen bei der Bildwiedergabe auftreten.

EP-A- 0 186 835 beschreibt einen Videorecorder, weicher das Band auf Zielmarkierungen positioniert, indem durch schnellen Vor- oder Rücklauf das Band zunächst vor die gewünschte eine eingegebene Stelle positioniert wird. Anschließend wird eine Feinpositionierung im schnellen Suchlauf vorgenommen, bis eine Zielmarkierung (Anzahl von Schwarzbildern) erkannt wird. Nach Erkennung der Zielmarkierung wird auf Wiedergabe umgeschaltet. Hierbei wird jedoch weder eine Positionierstrecke um die eingegebene Position errechnet, noch eine auf dem Band aufgezeichnete Markierungsstrecke verwendet, deren Anfang die Zielmarkierung darstellt.

Der Erfindung liegt die Aufgabe zugrunde, ohne wesentlichen zusätzlichen Aufwand in einem eingangs angegebenen Videorecorder ein zielgenaues Auffinden des Anfanges einer gewünschten, auf ein Videoband aufgezeichneten Videodarbietung ohne Störung der Bildwiedergabe zu ermöglichen. Diese Aufgabe wird nach der Erfindung durch die im kennzeichnenden Teil des Anspruches 1 oder des Anspruches 2 angegebenen Maßnahmen gelöst.

Mit den Maßnahmen nach der Erfindung wird ein sehr schnelles Auffinden des Anfanges einer gewünschten, auf ein Videoband aufgezeichneten Videodarbietung ermöglicht, da der größte Teil des Ziellaufes des Videobandes zu der eingegebenen Zielposition in einem Schnellauf durchgeführt wird, bei dem das Band sehr schnell unmittelbar in der Videokassette umgespult wird. Erst an der eingegebenen Zielposition wird das Band aus der Vidoekassette ausgefädelt und an einem Abtastkopf vorbeigeführt, der die Kontrollspur des Videobandes abtastet. Dadurch wird das Videoband nur einem unerheblichen Bandabrieb an den Abtastköpfen ausgesetzt. Außerdem beeinflußt der Ziellauf und die Art der Anfangsmarkierung in keiner Weise die Wiedergabe von auf das Videoband aufgezeichneten Videodarbietungen.

Die Unteransprüche kennzeichnen vorteilhafte Ausgestaltungen der Erfindung.

Die Erfindung wird nachfolgend anhand vorteilhafter Ausführungsbeispiele näher erläutert. In den zugehörigen Zeichnungen zeigen
- Fig. 1: ein Blockschaltbild zur Laufwerksteuerung eines Videorecorders,
- Fig. 2a und 2b: je ein Ablaufdiagramm zu der in Fig. 1 dargestellten Laufwerksteuerung,
- Fig. 3: ein Blockschaltbild zu einer weiteren Laufwerksteuerung eines Videorecorders,
- Fig. 4a b und c: je ein Ablaufdiagramm zu der in Fig. 3 dargestellten Laufwerksteuerung.

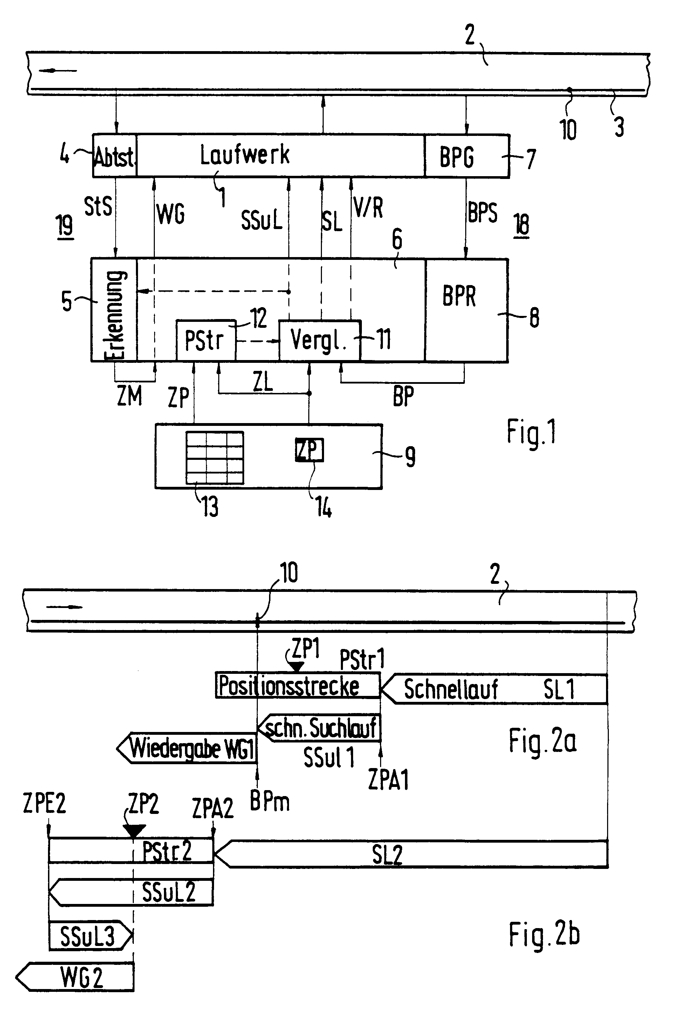

In Fig. 1 ist ein Blockschaltbild zur Laufwerksteuerung eines Videorecorders dargestellt, in dessen Laufwerk 1 ein Videoband 2 eingelegt ist. Das Videoband 2 enthält eine Steuersignalspur 3 mit Steuersignalen, die von einer Abtasteinrichtung 4 des Laufwerkes 1 abgetastet und als Steuersignale StS einer Erkennungsschaltung 5 einer Laufwerk-Steuereinrichtung 6 des Videorecorders zur Synchronisierung der Wiedergabe der auf dem Videoband 2 aufgezeichneten Videodarbietungen zugeführt werden. Das Laufwerk 1 enthält außerdem einen Bandpositionssignalgeber 7, der Bandpositionssignale BPS an einen Bandpositionsrechner 8 der Laufwerk-Steuereinrichtung 6 weitergibt. Die Laufwerk-Steuereinrichtung dient zur Einstellung der verschiedenen Betriebszustände des Laufwerkes 1 des Videorecorders. So wird beispielsweise das Laufwerk 1 von einer Signalkombination WG in den Betriebszustand der Abtastung und Wiedergabe einer auf das Videoband 2 aufgezeichneten Videodarbietung eingestellt oder durch eine Signalkombination SL der Laufwerk-Steuereinrichtung 6 in einen Schnellauf SL eingestellt, in dem das Videoband 2 innerhalb seiner nicht näher dargestellten Videokassette ohne Ausfädelung des Videobandes aus der Videokassette umgespult wird, oder durch eine Signalkombination SSuL in einen schnellen Suchlauf SSuL eingestellt, in dem das in das Laufwerk 1 ausgefädelte Videoband 2 mit einer gegenüber der Wiedergabelaufgeschwindigkeit wesentlich erhöhten Laufgeschwindigkeit abgetastet wird. Ein Vor-/Rückwärtssignal V/R der Laufwerksteuereinrichtung 6 legt die Laufrichtung des Schnellaufes SL und des schnellen Suchlaufes SSuL fest. Die Betriebszustände der Laufwerk-Steuereinrichtung 6 bzw. des Videorecorders können an einer Bedienungseinrichtung 9 vom Benutzer gewählt werden.

Die Steuersignalspur 3 enthält zusätzlich zu den Steuersignalen eine Zielmarkierung 10, die beispielsweise bildgenau den Anfang einer auf das Videoband 2 aufgezeichneten Videodarbietung kennzeichnet. Der Videorecorder nach Fig. 1 ist dazu eingerichtet, diese Zielmarkierung 10 auf dem Videoband 2 aufzufinden und die damit markierte Videodarbietung vom Videoband wiederzugeben. Dazu enthält die Laufwerk-Steuereinrichtung 6 eine Vergleicherschaltung 11 oder ein Vergleicherprogramm und einen Positionsstreckenrechner 12 oder ein Positionstreckenrechenprogramm. Die Zielposition ZP, nämlich die Bandposition, an der sich die Zielmarkierung 10 für den Anfang der gesuchten, auf das Videoband aufgezeichneten Videodarbietung befinden soll, wird über eine Eingabeanordnung 13 der Bedienungseinrichtung eingegeben und durch Betätigen eines Bedienungselementes 14, das den Ziellauf ZL zum Auffinden der eingegebenen Zielposition ZP auslöst, als Zielposition gekennzeichnet und dem Positionsstreckenrechner 12 zugeführt. Der Positionsstreckenrechner 12 bildet daraus eine bestimmte Positionsstrecke PStr um die Zielposition ZP. Die Ausdehnung der Positionsstrecke um die Zielposition ZP ist so bemessen, daß sie größer ist als der Genauigkeitsbereich zur Einstellung der Zielposition ZP auf die tatsächliche Bandposition BP der Zielmarkierung 10 auf dem Videoband 2. Gleichzeitig stellt die Vergleicherschaltung 11 durch einen Vergleich der eingegebenen Zielposition ZP mit der vom Bandpositionsrechner 8 ausgegebenen Bandposition BP fest, in welche Richtung die Laufwerk-Steuereinrichtung 6 den Schnellauf SL für den Ziellauf zur eingegebenen Zielposition einstellen muß. Dieser Schnellauf ist im Ablaufdiagramm der Fig. 2a für den Funktions- oder Programmablauf der in Fig. 1 dargestellten Laufwerk-Steuereinrichtung 6 durch einen Pfeil SL1 angegeben. Wird die vom Bandpositionsrechner 8 ausgegebene Bandposition BP gleich dem vom Positionsstreckenrechner 12 errechneten Positionswert ZPA1 für den Anfang der Positionsstrecke PStr1, schaltet die Vergleicherschaltung 11 das Laufwerk 1 über die Laufwerk-Steuereinrichtung 6 vom Schnellauf SL in den schnellen Suchlauf SSul mit der gleichen Laufrichtung wie der Schnellauf um, was in Fig. 2a durch den Pfeil SSuL1 dargesetellt ist und schaltet die Erkennungsschaltung 5 zur Erkennung der Zielmarkierung 10 wirksam. Sobald die Erkennungsschaltung 5 innerhalb der Positionsstrecke PStr1 der an der Eingabeeinrichtung 13 eingegebenen Zielposition diese Zielposition ZP1 erkennt und ein Zielmarkensignal ZM ausgibt, wird der schnelle Suchlauf SSuL1 gestoppt und die Laufwerk-Steuereinrichtung 6 vom Zielmarkensignal ZM in den Wiedergabebetriebszustand eingestellt, der auch das Laufwerk 1 in den Wiedergabebetriebszustand WG1 einstellt, was durch den Pfeil WG1 schematisch dargestellt ist.

Liegt die eingegebene Zielposition ZP2 so weit von der tatsächlichen Bandposition BPm der Zielmarkierung 10 der gewünschten Videodarbietung entfernt, daß die Bandposition BPm der Zielmarkierung 10 außerhalb der zu der eingegebenen Zielposition ZP2 errechneten Positionsstrecke PStr2 liegt, wie dies im Ablaufdiagramm der Fig. 2b dargestellt ist, durchläuft der nach dem Schnellauf SL2 am Anfang ZPA2 der Positionsstrecke PStr2 eingeschaltete schnelle Suchlauf SSuL2 die gesamte Positionsstrecke und wird am Ende ZPE2 dieser Positionsstrecke in die Gegenrichtung umgeschaltet, was in Fig. 2b durch den Pfeil SSuL3 dargestellt ist . Sobald die vom Bandpositionsrechner 8 ausgegebene Bandposition den Wert der eingegebenen Zielposition ZP2 erreicht, wird der schnelle Suchlauf in Gegenrichtung gestoppt und bei dem in Fig. 1 dargestellten Ausführungsbeispiel die Laufwerk-Steuereinrichtung 6 in den Wiedergabebetriebszustand geschaltet, was in dem Ablaufdiagramm der Fig. 2b durch den Pfeil WG2 schematisch dargedstellt ist. Auf diese Weise wird dann, wenn keine Zielmarkierung 10 erkannt wird, die eingegebene Zielposition ZP2 als Anfang der ausgewählten Videodarbietung gewertet.

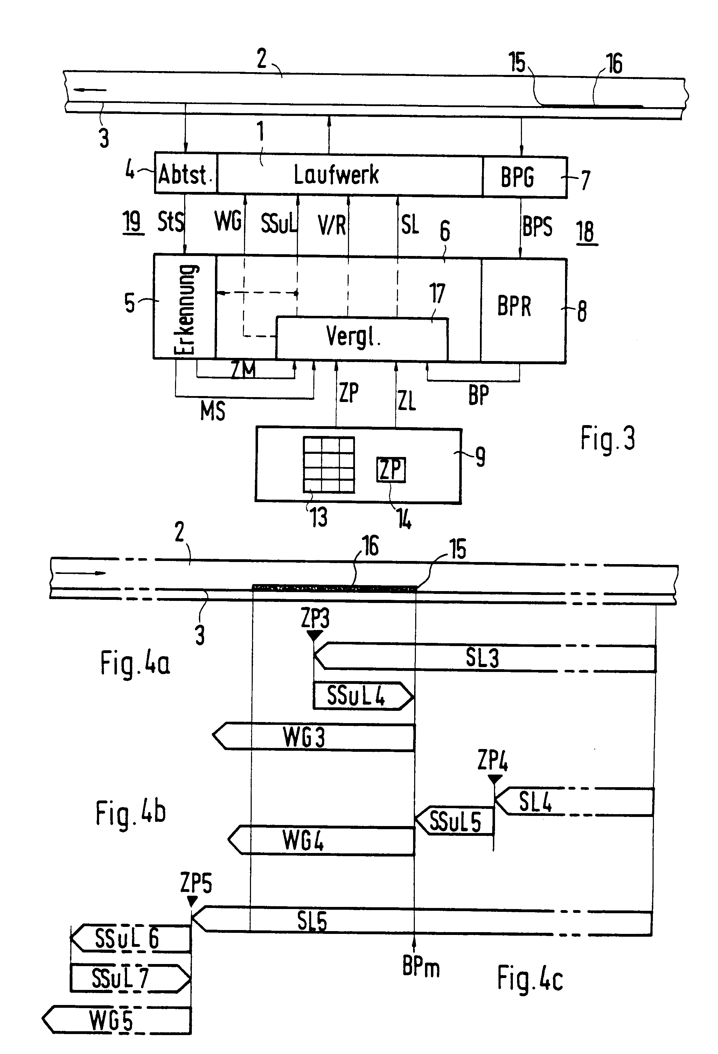

Der Videorecorder, von dem in Fig. 3 ein Blockschaltbild zu einer Laufwerksteuerung dargestellt ist, unterscheidet sich von dem in Fig. 1 dargestellten Videorecorder im wesentlichen dadurch, daß die zusätzlich zu den Steuersignalen auf die Steuersignalspur 3 des Videobandes 2 aufgezeichneten Zielmarkierungen der Anfang 15 einer mit einem Markierungssignal belegten Markierungsstrecke 16 ist. Übereinstimmende Baugruppen und Einrichtungen sind in den Figuren 1 und 3 mit den gleichen Bezugszeichen bezeichnet. Dementsprechend unterscheidet sich die Vergleicherschaltung 17 der Laufwerk-Steuereinrichtung 6 des in Fig. 3 dargestellten Videorecorders von der Vergleicherschaltung 11 der Laufwerk-Steuereinrichtung 6 des in Fig. 1 dargestellten Videorecorders. Der Funktionsablauf des von der Vergleicherschaltung 17 über die Laufwerk-Steuereinrichtung 6 gesteuerten Laufwerkes 1 des in Fig. 3 dargestellten Videorecorders ist in den Ablaufdiagrammen a, b und c der Fig. 4 für drei verschiedene über die Eingabeeinrichtung 13 der Bedienungseinrichtung 9 eingegebene Zielpositionen ZP3, ZP4 und ZP5 schematisch dargestellt. Nach Auslösen des Ziellaufes am Bedienungselement 14 der Bedienungseinrichtung 9 des Videorecorders stellt die Vergleicherschaltung 17 das Laufwerk 1 in einen Schnellauf SL in Richtung der eingegebenen Zielposition ZP3, ZP4 oder ZP5 so lange ein, bis die aus dem Bandpositionsgeber 7 und dem Bandpositionsrechner 8 gebildete Einrichtung 18 zur Ermittlung und Ausgabe der Bandposition eine Bandposition BP ausgibt, die gleich der eingegebenen Zielposition ist. Bei dieser Koinzidenz wird das Laufwerk 1 vom Schnellauf SL3, SL4 oder SL5 in einen schnellen Suchlauf SSuL4, SSuL5 oder SSuL6 umgeschaltet. Die Richtung des schnellen Suchlaufes richtet sich danach, ob die aus der Abtasteinrichtung 4 und der Erkennungsschaltung 5 gebildete Erkennungseinrichtung 19 Markierungssignale einer Markierungsstrecke 16 erkennt oder nicht. Erkennt die Einrichtung 19 Markierungssignale, gibt sie während der Dauer des Erkennens ein dementsprechendes Markierungssignal ZM aus, das die Gegenrichtung des schnellen Suchlaufes SSuL4 festlegt, wie dies im Ablaufdiagramm der Fig. 4a dargestellt ist. Beim Abbruch dieses Markierungssginales ZM schaltet die Vergleicherschaltung 17 die Laufwerk-Steuereinrichtung 6 in den Wiedergabezustand, so daß auch das Laufwerk 1 in den Wiedergabezustand WG3 (Pfeil WG3 in Fig. 4a) eingestellt ist. Die Wiedergabe einer auf das Videoband 2 aufgezeichneten Videodarbietung beginnt damit am Anfang 15 der zu dieser Aufzeichnung gehörenden Markierungsstrecke. Die Länge der Markierungsstrecke 16 ist so lange bemessen, daß sie größer ist als die zu erwartende Auffindgenauigkeit der Bandposition BPm des Anfanges 15 der auf die Steuersignalspur aufgezeichneten Markierungsstrecke 16 für den Anfang der zugehörigen Videodarbietung auf dem Videoband 2.

Wird dagegen bei einer Koinzidenz der von dem Bandpositionsrechner 8 der Einrichtung 18 ausgegebenen Bandposition BP mit der Zielposition ZP4 oder ZP5 von der Erkennungseinrichtung 19 kein Markierungssignal einer Markierungsstrecke 16 erkannt und kein dementsprechendes Markierungssignal ZM ausgegeben, wird für den anschließenden schnellen Suchlauf SSuL5 oder SSuL6 die Laufrichtung des vorhergehenden Schnellaufes beibehalten, bis die Erkennungseinrichtung 19 Signale einer Markierungsstrecke 16 erkennt. Dies ist im Ablaufdiagramm nach Fig. 4b dargestellt. In diesem Augenblick schaltet die Vergleicherschaltung 17 oder das entsprechende Vergleicherprogramm die Laufwerk-Steuereinrichtung 6 in den Wiedergabebetriebszustand. Dadurch wird auch das Laufwerk 1 in den Wiedergabebetriebszustand eingestellt, wie durch den Pfeil WG4 im Ablaufdiagramm der Fig. 4b schematsich dargestellt ist. Auch in diesem Fall wird die auf dem Videoband 2 aufgezeichnete Videodarbietung ab der Anfangsmarkierung 15 der erkannten Markierungsstrecke 16 vom Videorecorder wiedergegeben. Erzeugt jedoch die Erkennungseinrichtung 19 innerhalb einer vorgegebenen Laufstrecke des schnellen Suchlaufes SSuL6, die größer ist als der Genauigkeitsbereich zum Auffinden einer Bandposition, die gleich der eingegebenen Zielposition ist, kein Markierungssignal ZM, was im Ablaufdiagramm der Fig. 4c schematisch durch den Pfeil SSuL6 dargestellt ist, schaltet die Vergleicherschaltung den schnellen Suchlauf in die Gegenrichtung um (Pfeil SSuL7), bis die vom Bandpositionsrechner 8 ausgegebene Bandposition BP gleich der eingegebenen Zielposition ZP5 ist. Bei dieser Koinzidenz schaltet die Vergleicherschaltung 17 die Laufwerk-Steuereinrichtung 6 in den Wiedergabezustand, durch den das Laufwerk 1 ebenfalls in den Wiedergabezustand eingestellt ist (Pfeil WG5 im Ablaufdiagramm der Fig. 4c). Damit wird erreicht, daß dann, wenn im schnellen Suchlauf (SSuL6) nach einer vorgegebenen Bandlaufstrecke keine Zielmarkierung 15 erkannt wird, die eingegebene Zielposition ZP5 als Anfang der Wiederzugebenden Videodarbietung gewertet wird.

In einem weiteren Ausführungsbeispiel eines Videorecorders, das dem in Fig. 3 im Auszug schematisch dargestellten Videorecorder entspricht und für das das in Fig. 3 dargestellte Blockschaltbild ebenfalls gilt, wird ein Videoband 2 verwendet, auf dessen Steuersignalspur 3 außer den Steuersignalen und der Zielmarkierung 16 eine Markierungskennung aufgezeichnet ist. Diese Markierungskennung ist nur dann durchgehend auf die Steuersignalspur 3 des Videobandes aufgezeichnet, wenn die Steuersignalspur 3 gleichzeitig wenigstens eine Zielmarkierung 15 enthält. Die Erkennungsschaltung 5 der Erkennungseinrichtung 19 des Videorecorders ist so eingerichtet, daß sie die Markierungskennung erkennt und beim Abtasten und Erkennen einer derartigen Markierungskennung ein Markierungssignal MS ausgibt. Erst dieses Markierungssignal MS schaltet die Vergleicherschaltung 17 in den Zustand, in dem sie auf die Erkennung einer Zielmarkierung reagiert und die in Fig. 4a bis Fig. 4c dargestellten Funktionsabläufe durchführt. Gibt die Erkennungsschaltung 5 dieses Markierungssignal MS nicht aus, stellt die Vergleicherschaltung 17 nach dem Auslösen eines Ziellaufes das Laufwerk 1 über die Laufwerk-Steuereinrichtung 6 auf den Schnellauf SL5 in Richtung der über die Eingabeeinrichtung 13 eingegebenen Zielposition ZP5 ein und schaltet dann, wenn die vom Bandpositionsrechner ausgegebene Bandposition gleich der eingegebenen Zielposition ZP5 ist, die Laufwerk-Steuereinrichtung 6 und damit auch das Laufwerk 1 in den Wiedergabezustand, so daß der Videorecorder ohne Zwischenschalten eines schnellen Suchlaufes unmittelbar ab der Bandposition des Videobandes, die gleich der eingegebenen Zielposition ist, die auf das Videoband aufgezeichnete Videodarbietung wiedergibt. Damit wird vermieden, daß bei einem Videoband, das keine Zielmarkierungen 10 oder 15 enthält, eine zusätzliche Suchzeit für das Auffinden einer Zielmarkierung verwendet wird.

## Patentansprüche

1. Videorecorder
- mit einem Videoband, auf dem zusätzlich eine Steuersignalspur aufgezeichnet ist,
- mit einer Laufwerk-Steuereinrichtung zur Einstellung wenigstens eines schnellen Suchlaufes, bei dem die Steuersignalspur abgetastet wird, und eines Schnellaufes des Videobandes, bei dem das Videoband außerhalb einer Abtasteinstellung umgespult wird,
- und mit einer Einrichtung zur Ermittlung und Ausgabe einer an der Bandabtastung befindlichen Bandposition des Videobandes, sowohl im schnellen Suchlauf als auch im abtastfreien Schnellauf,
**dadurch gekennzeichnet,**
- daß die Steuersignalspur (3) des Videobandes (2) an vorgegebenen Bandpositionen (BPm) zusätzlich eine Zielmarkierung (10) enthält,
- daß die Laufwerk-Steuereinrichtung (6) derart ausgestaltet ist, daß sie um eine in die Laufwerk-Steuereinrichtung eingegebene Zielposition herum (ZP1) eine Positionsstrecke (PStr1) errechnet und den Schnellauf (SL1) so lange in Richtung der eingegebenen Zielposition eingeschaltet erhält, bis die Einrichtung (18) zur Ermittlung der Bandposition eine Bandposition (BP) ausgibt, die gleich dem Anfang (ZPA1) der Positionsstrecke der eingegebenen Zielposition ist,
- und daß die Laufwerk-Steuereinrichtung innerhalb der errechneten Positionsstrecke den schnellen Suchlauf (SSuL1) so lange eingeschaltet erhält, bis eine Erkennungseinrichtung (19) eine Zielmarke (10) auf der Steuersignalspur des Videobandes abtastet und erkennt oder die Einrichtung zur Erkennung der Bandposition eine Bandposition (ZPE2) ausgibt, die außerhalb der Positionsstrecke liegt.

2. Videorecorder nach dem Oberbegriff des Anspruches 1,
**dadurch gekennzeichnet,**
- daß die Steuersignalspur (3) des Videobandes (2) an vorgegebenen Bandpositionen (BPm) zusätzlich eine Zielmarkierung (15) enthält, die der Anfang einer sich über eine bestimmte Länge in Richtung der aufgezeichneten Videodarbietung auf der Steuersignalspur erstreckenden Markierungsstrecke (16) ist und an der vorgegebenen Bandposition liegt,
- daß die Laufwerk-Steuereinrichtung (6) derart ausgestaltet ist, daß sie den Schnellauf (SL3) des Videobandes in die Richtung einer in die Laufwerk-Steuereinrichtung eingegebenen Zielposition (ZP3) für das Videoband so lange eingeschaltet erhält, bis die Einrichtung (18) zur Ermittlung der Bandposition eine Bandposition (BP) ausgibt, die gleich der eingegebenen Zielposition ist,
- daß anschließend die Laufwerk-Steuerschaltung den schnellen Suchlauf (SSuL4) so lange eingeschaltet erhält, bis eine Erkennungseinrichtung (19) den Anfang (15) einer Markierungsstrecke (16) abtastet und erkennt,
- und daß die Richtung des schnellen Suchlaufes die Bandvorlaufrichtung ist, wenn die Erkennungseinrichtung keine Markierungsstrecke (16) erkennt, und die Bandrücklaufrichtung ist, wenn die Erkennungseinrichtung eine Markierungsstrecke erkennt.

3. Videorecorder nach Anspruch 1 oder 2,
**dadurch gekennzeichnet,**
- daß die Laufwerk-Steuereinrichtung (6) die eingeschaltete Laufrichtung des schnellen Suchlaufes (SSuL2, SSuL6) des Videobandes (2) in die Gegenrichtung umschaltet, wenn im schnellen Suchlauf der ersten Laufrichtung nach einer vorgegebenen Bandlaufstrecke des Videobandes die Erkennungseinrichtung (19) keine Zielmarkierung (10, 15) erkennt, und den schnellen Suchlauf (SSuL3, SSuL7) in Gegenrichtung stillsetzt, wenn die Einrichtung (18) zur Ermittlung der Bandposition wieder die Bandposition ausgibt, die gleich der eingegebenen Zielposition (ZP2, ZP5) für das Videoband ist.

4. Videorecorder nach einem der Ansprüche 1 bis 3,
**dadurch gekennzeichnet,**
- daß auf der Steuersignalspur (3) des Videobandes (2) zusätzlich zu einer aufgezeichneten Zielmarkierung (10, 15) eine durchgehende Markierungskennung aufgezeichnet ist,
- und daß die Erkennungseinrichtung (19) zusätzlich zur Erkennung der Markierungskennung eingerichtet ist und bei Nichterkennen einer Markierungskennung die Laufwerk-Steuereinrichtung (6) so einstellt, daß sie nach Eingabe einer Zielposition (ZP5) den Schnellauf (SL5) so lange in Richtung der eingegebenen Zielposition eingeschaltet erhält, bis die Einrichtung (18) zur Ermittlung der Bandposition eine Bandposition (BP) ausgibt, die gleich der eingegebenen Zielposition (ZP5) ist, und danach die Laufwerk-Steuereinrichtung in den Wiedergabebetriebszustand (WG5) einstellt.

5. Videorecorder nach einem der Ansprüche 1 bis 4,
**dadurch gekennzeichnet,**
daß die Steuersignalspur (3) des Videobandes (2) die Spur für die Bild-Synchronimpulse ist.

6. Videorecorder nach Anspruch 5,
**dadurch gekennzeichnet,**
daß die Zielmarkierungen (10, 15) auf der Steuersignalspur (3) Bild-Synchronimpulse sind, deren Impulslänge unterscheidbar von einer vorgegebenen Normlänge der Bild-Synchronimpulse abweicht.

7. Videorecorder nach Anspruch 6,
**dadurch gekennzeichnet,**
daß die Impulslänge aller Bild-Synchronimpulse der Steuersignalspur (3), die nicht die Information einer Zielmarkierung (10, 15) tragen, unterscheidbar sowohl von der vorgegebenen Normlänge der Bild-Synchronimpulse als auch von der Impulslänge der die Information einer Zielmarkierung tragenden Bild-Synchronimpulsen abweicht und die Information der Markierungskennung darstellt.

## Claims

1. Video recorder
- with a videotape on which a control signal track is additionally recorded;
- with a mechanism control device for setting at least one fast search mode in which the control signal track is scanned, and a videotape fast wind mode in which the videotape is wound outside a scanning setting;
- and with a device for determining and outputting a tape position of the videotape located at the band scanning system, both in fast search mode and in non-scanning fast wind mode,
**characterized in that**
- the control signal track (3) of the videotape (2) additionally contains a target marking (10) at predefined tape positions (BPm);
- the mechanism control device (6) is configured in such a way that it calculates a position segment (PStr1) around a target position (ZP1) entered into the mechanism control device, and keeps the fast wind mode (SL1) activated in the direction of the entered target position until the device (18) for determining the tape position outputs a tape position (BP) that is equal to the beginning (ZPA1) of the position segment of the entered target position; and that
- the mechanism control device keeps the fast search mode (SSuL1) activated within the calculated position segment until a detection device (19) scans and detects a target mark (10) on the control signal track of the videotape, or the device for detecting the tape position outputs a tape position (ZPE2) that lies outside the position segment.

2. Video recorder according to the preamble of Claim 1,
**characterized in that**
- the control signal track (3) of the videotape (2) additionally contains, at predefined tape positions (BPm), a target marking (15) that is the beginning of a marking segment (16) extending over a certain length in the direction of the recorded video program, and is located at the predefined tape position;
- the mechanism control device (6) is configured in such a way that it keeps the fast wind mode (SL3) of the videotape in the direction of a target position (ZP3) for the videotape entered into the mechanism control device activated until the device (18) for determining tape position outputs a tape position (BP) that is equal to the entered target position;
- the mechanism control circuit then keeps the fast search mode (SSuL4) activated until a detection device (19) scans and detects the beginning (15) of a marking segment (16); and that
- the direction of the fast search mode is the forward winding direction if the detection device detects no marking segment (16), and the reverse winding direction if the detection device detects a marking segment.

3. Video recorder according to Claim 1 or 2,
**characterized in that**
- the mechanism control device (6) switches the activated winding direction of the fast search mode (SSuL2, SSuL6) of the videotape (2) to the opposite direction if the detection device (19) does not detect a target marking (10, 15) during fast search in the first winding direction after a predefined segment of the videotape has been wound, and stops fast search mode (SSuL3, SSuL7) in the opposite direction when the device (18) for determining the tape position again outputs the tape position that is identical to the entered target position (ZP2, ZP5) for the videotape.

4. Video recorder according to any one of Claims 1 to 3,
**characterized in that**
- a continuous marking identifier is recorded on the control signal track (3) of the videotape in addition to a recorded target marking (10, 15); and that
- the detection device (19) is additionally configured to detect the marking identifier, and if a marking identifier is not detected, sets the mechanism control device (6) so that after a target position (ZP5) has been input, it keeps the fast wind mode (SL5) activated in the direction of the entered target position until the device (18) for determining the tape position outputs a tape position (BP) that is identical to the entered target position (ZP5), and then sets the mechanism control device to playback mode (WG5).

5. Video recorder according to any one of Claims 1 to 4,
**characterized in that**
the control signal track (3) of the videotape (2) is the track for the frame synchronization pulse.

6. Video recorder according to Claim 5,
**characterized in that**
the target markings (10, 15) on the control signal track (3) are frame synchronization pulses whose pulse length differs distinguishably from a predefined standard frame synchronization pulse length.

7. Video recorder according to Claim 6,
**characterized in that**
the pulse length of all frame synchronization pulses of the control signal track (3) that do not carry information about a target marking (10, 15) differs distinguishably both from the predefined standard frame synchronization pulse length and from the pulse length of the frame synchronization pulses carrying the information about a target marking, and represents the information about the marking identifier.

## Revendications

1. Enregistreur vidéo
- avec une bande vidéo sur laquelle est enregistrée additionnellement une piste de signaux de commande,
- avec un dispositif de commande du mécanisme pour le réglage d'au moins une course de détection rapide pendant laquelle la piste de signaux de commande est balayée, et d'une marche rapide de la bande vidéo avec laquelle la bande vidéo est rebobinée en dehors du réglage du balayage,
- et avec un dispositif pour la détection et la sortie d'une position de la bande vidéo se situant sur le balayage de bande, aussi bien pendant la course de détection rapide que pendant la marche rapide exempte de balayage,
**caractérisé en ce que**
- la piste de signaux de commande (3) de la bande vidéo (2) contient sur des positions de bande présélectionnées (BPm) en plus un repère (10),
- le dispositif de commande du mécanisme (6) est réalisé de manière à calculer autour d'une position de repérage (ZP1), introduite dans le dispositif de commande du mécanisme, un intervalle de position (PStr1) et qu'il maintient la marche rapide (SL1) aussi longtemps en direction de la position de repérage introduite, jusqu'à ce que le dispositif (18) pour la détection de la position de la bande émet une position de bande (BP) égale au début (ZPA1) de l'intervalle de position de la position de repérage introduite,
- et que le dispositif de commande du mécanisme maintient, à l'intérieur de l'intervalle de position calculé (SSuL1), la course de détection en marche jusqu'à ce qu'un dispositif de reconnaissance (19) balaye un repère (10) sur la piste de commande de signaux de la bande vidéo et le reconnaît ou le dispositif pour la reconnaissance de la position de bande émet une position de bande (ZPE2) située à l'extérieur de l'intervalle de position.

2. Enregistreur vidéo selon le préambule de la revendication 1,
**caractérisé en ce que**
- la piste de signaux de commande (3) de la bande vidéo (2) contient, sur des positions de bande sélectionnées (BPm), en plus un repère (15) marquant le début d'un intervalle (16) sur une certaine longueur sur la piste de commande de signaux en direction de la présentation vidéo enregistrée et se situant sur la position de bande présélectionnée,
- le dispositif de commande du mécanisme (6) est équipé de manière à faire fonctionner la marche rapide (SL3) de la bande vidéo dans la direction d'une position de repérage (ZP3) pour la bande vidéo introduite dans le dispositif de commande du mécanisme jusqu'à ce que le dispositif (18) pour la détection de la position de la bande émet une position de bande (BP) égale à la position repère introduite,
- ensuite la commande du mécanisme fait fonctionner la course de détection rapide (SSuL4) aussi longtemps jusqu'à ce qu'un dispositif de détection (19) balaye le début (15) d'un intervalle de repérage (16) et le reconnaît,
- et que la direction de la course de détection rapide correspond à la direction d'avance de la bande si le dispositif de détection ne reconnaît pas d'intervalle de repérage (16), et qu'elle correspond à la direction de retour de la bande si le dispositif de détection reconnaît un intervalle de repérage.

3. Enregistreur vidéo selon la revendication 1 ou 2,
**caractérisé en ce que**
- le dispositif de commande du mécanisme (6) commute la direction de la course de détection rapide (SSuL2, SSuL6) enclenchée de la bande vidéo (2) dans le sens contraire si, pendant la course de détection rapide dans la première direction, le dispositif de détection (19) ne reconnaît pas de repère (10, 15) après une course présélectionnée de la bande vidéo et arrête la course de détection rapide (SSuL3, SSuL7) en sens contraire si le dispositif (18) pour la détection de la position de bande émet à nouveau la position de la bande correspondant à la position repère (ZP2, ZP5) introduite pour la bande vidéo.

4. Enregistreur vidéo selon l'une des revendications 1 à 3,
**caractérisé en ce que**
- sur la piste de signaux de commande (3) de la bande vidéo (2) est enregistrée, en plus d'un repère (10, 15) enregistré, une caractéristique de repérage continue,
- et que le dispositif de détection (19) est installé additionnellement à la détection de la caractéristique de repérage et règle, en cas de non reconnaissance d'une caractéristique de repérage, le dispositif de commande du mécanisme (6) de manière à ce qu'il maintienne, après introduction d'une position de repérage (ZP5), la marche rapide (SL5) en direction de la position de repérage introduite jusqu'à ce que le dispositif (18) pour la détection de la position de bande émet une position de bande (BP) correspondant à la position repère (ZP5) introduite et règle ensuite le dispositif de commande du mécanisme sur le mode de fonctionnement reproduction (WG5).

5. Enregistreur vidéo selon l'une des revendications 1 à 4,
**caractérisé en ce que**
- la piste de signaux de commande (3) de la bande vidéo (2) est la piste pour les impulsions de synchronisation verticale.

6. Enregistreur vidéo selon la revendication 5,
**caractérisé en ce que**
- les repères (10, 15) sur la piste de signaux de commande (3) sont des impulsions de synchronisation verticale, dont la durée dévie de façon discernable d'une durée standard présélectionnée des impulsions de synchronisation verticale.

7. Enregistreur vidéo selon la revendication 6,
**caractérisé en ce que**
- la durée d'impulsion de toutes les impulsions de synchronisation verticale de la piste de signaux de commande (3) ne portant pas l'information d'un repère (10, 15) dévie de façon discernable aussi bien de la durée standard présélectionnée des impulsions de synchronisation verticale que de la durée d'impulsion des impulsions de synchronisation verticale portant l'information d'un repère et représente l'information de la caractéristique de repérage.
